# EUROPÄISCHE PATENTSCHRIFT

(11) **EP 3 980 762 B1**
(45) Veröffentlichungstag und Bekanntmachung des Hinweises auf die Patenterteilung: **13.08.2025**
(21) Anmeldenummer: 20711068.5
(22) Anmeldetag: 04.03.2020
(51) Int. Cl.: G01N 21/90, G01N 21/88

(54) **VERFAHREN UND VORRICHTUNG ZUR OPTISCHEN INSPEKTION VON BEHÄLTERN**
METHOD AND DEVICE FOR OPTICALLY INSPECTING CONTAINERS
PROCÉDÉ ET DISPOSITIF D'INSPECTION OPTIQUE DE CONTENANTS

(30) Priorität: 06.06.2019 DE 102019208296
(43) Veröffentlichungstag der Anmeldung: 13.04.2022
(73) Patentinhaber: Krones AG, 93073 Neutraubling (DE)
(72) Erfinder: NIEDERMEIER, Anton, 93073 Neutraubling (DE)
(74) Vertreter: Grünecker Patent- und Rechtsanwälte PartG mbB
(86) Internationale Anmeldenummer: PCT/EP2020/055618
(87) Internationale Veröffentlichungsnummer: WO 2020/244815

(56) Entgegenhaltungen:
- DE-A1- 102014 220 598
- DE-A1- 102017 008 406
- DE-U1- 202013 100 834

## Beschreibung

Die Erfindung betrifft ein Verfahren und eine Vorrichtung zur optischen Inspektion von Behältern mit den Merkmalen des Oberbegriffs von Anspruch 1 bzw. 9.

Üblicherweise werden derartige Verfahren und Vorrichtungen dazu eingesetzt, die Behälter auf Fremdkörper und/oder Fehlstellen hin zu inspizieren. Dazu werden die Behälter zu einer Inspektionseinheit mit einer Beleuchtungseinheit und mit einer Kamera transportiert, so dass sie im Durchlicht oder im Auflicht inspiziert werden können. Dabei strahlt die Beleuchtungseinheit von einer flächigen Lichtaustrittsfläche Licht ab, das über die Behälter transmittiert oder reflektiert und anschließend mit der Kamera als wenigstens ein Kamerabild erfasst wird. Anschließend wird das wenigstens eine Kamerabild mit einer Bildverarbeitungseinheit auf Intensitätsinformationen hin ausgewertet, um die Fremdkörper und/oder Fehlstellen der Behälter zu erkennen.

Beispielsweise kommen derartige Verfahren und Vorrichtung bei der Seitenwand-, Boden- und/ oder Füllhöheninspektion von leeren oder bereits mit einem Produkt befüllten Behältern zum Einsatz.

Dabei werden die Behälter zur Erkennung von Fremdkörpern üblicherweise mit einer diffus abstrahlenden Lichtaustrittsfläche inspiziert, um im Kamerabild beispielsweise Glasprägungen oder Wassertropfen zu unterdrücken. Bei den Fremdkörpern kann es sich beispielsweise um Verschmutzungen, Produktreste, Reste von Etiketten oder dergleichen handeln.

Dagegen wird zur Erkennung von Fehlstellen eine gerichtet abstrahlende Lichtaustrittsfläche eingesetzt, um die dadurch auftretende Lichtbrechung in dem Kamerabild zu verstärken. Bei Fehlstellen kann es sich beispielsweise um Beschädigungen an den Behältern, wie beispielsweise abgeplatztes Glas handeln. Ebenso ist denkbar, dass es sich um fehlerhaft produzierte Materialstellen, wie beispielsweise lokale Materialverdickungen handelt.

Folglich werden üblicherweise zwei verschiedene Inspektionseinheiten mit unterschiedlicher Abstrahlcharakteristika der Beleuchtungseinheiten eingesetzt, um Fremdkörper und Fehlstellen gleichermaßen gut erkennen zu können.

Nachteilig dabei ist, dass dies einen entsprechenden Aufwand und Bauraum für die optische Inspektion der Behälter erfordert.

Aus der US 2013/0215261 A1 ist ein Verfahren zur Erkennung von Defekten in Glasartikeln und eine dazu geeignete Vorrichtung bekannt. Zur Kontraststeigerung wird hier eine Beleuchtung mit mehreren gegeneinander verschobenen Lichtmustern vorgeschlagen.

Die DE 10 2014 220 598 A1 offenbart eine Inspektionsvorrichtung zur Durchlichtinspektion von Behältern mit einer Einrichtung zur Unterteilung der Lichtaustrittsfläche in wenigstens zwei vorwiegend horizontal separierte Teilbereiche, die zur Seitenwandinspektion und/oder Verschlusskopfinspektion des Behälters wahlweise an- und abschaltbar sind.

Die US 6,304,323 B1 offenbart ein Verfahren zur Erkennung von Defekten in Flaschen.

Die EP 0 472 881 A2 offenbart ein System und ein Verfahren zur optischen Inspektion der Bodenflächen von transparenten Behältern.

Die US 2008/0310701 A1 offenbart ein Verfahren und eine Vorrichtung zur visuellen Inspektion eines Objekts.

Die EP 0 926 486 B1 offenbart ein Verfahren zur optischen Inspektion transparenter Behälter unter Verwendung von infrarotem und polarisiertem sichtbaren Licht.

Die DE 10 2017 008 406 A1 offenbart eine Inspektionsvorrichtung mit Farbbeleuchtung zur Inspektion von Behältern auf Verunreinigungen und dreidimensionale Behälterstrukturen. Dazu weist eine Strahlungsquelle mehrere räumlich getrennte Strahlungszonen auf, die Strahlung in unterschiedlichen Wellenlängenbereichen oder mit unterschiedlichen Intensitäten emittieren. Bei Dekorelementen entsteht so ein lokaler Farbkontrast, während bei Verunreinigungen lediglich ein lokaler Helligkeitskontrast entsteht und kein lokaler Farbkontrast. Allerdings kann es in seltenen Fällen dabei vorkommen, dass bei farbigen Behältern dennoch die Fehlstellen nicht von den Fremdkörpern unterschieden werden können.

Die DE 20 2013 100 834 U1 offenbart eine Vorrichtung zur Erfassung von Verschmutzungen an Behältern.

Aufgabe der vorliegenden Erfindung ist es, ein Verfahren und eine Vorrichtung zur optischen Inspektion von Behältern bereitzustellen, mit denen sowohl Fremdkörper als auch Fehlstellen mit geringerem Aufwand erkannt werden können und die einen geringeren Bauraum erfordern.

Zur Lösung der Aufgabenstellung stellt die Erfindung ein Verfahren zur optischen Inspektion von Behältern mit den Merkmalen des Anspruchs 1 bereit. Vorteilhafte Ausführungsformen der Erfindung sind in den Unteransprüchen genannt.

Bei umfangreichen Untersuchungen der Anmelderin hat sich herausgestellt, dass das Licht an den Fehlstellen aufgrund der damit verbundenen lokalen Veränderung der Behälteroberfläche anders gebrochen wird, als an unversehrten Bereichen der Behälter. Folglich wird das Licht über die Fehlstelle von einem anderen Abstrahlort der Lichtaustrittsfläche zur Kamera hin umgelenkt, als von den unversehrten Bereichen. Umgekehrt ist dies bei Fremdkörpern oftmals weniger oder gar nicht der Fall, da beispielsweise eine Verschmutzung zu einer lokalen Absorption des Lichts führt, ohne dabei den Lichtweg zur Kamera hin wesentlich zu beeinflussen.

Dadurch, dass das von der Lichtaustrittsfläche abgestrahlte Licht auf Basis der Polarisationseigenschaft und/oder der Phaseneigenschaft örtlich kodiert ist und von der Kamera erfasst wird, kann unabhängig von der Abstrahlcharakteristik der Lichtaustrittsfläche für die Bildpunkte des Kamerabilds jeweils bestimmt werden, von welchem der Abstrahlorte der entsprechende Lichtanteil her stammt. Dadurch, dass die Bildverarbeitungseinheit das wenigstens eine Kamerabild auf Ortsinformationen der Abstrahlorte hin auswertet, kann beispielsweise aufgrund einer lokalen Veränderung des Abstrahlorts eine Fehlstelle von einem Fremdkörper unterschieden werden. Umgekehrt können nach wie vor die Intensitätsinformationen ausgewertet werden, um bei einer möglichst diffusen Abstrahlcharakteristik der Lichtaustrittsfläche die Absorption des Lichts durch Fremdkörper besonders gut zu erkennen. Folglich ist es mit dem erfindungsgemäßen Verfahren möglich, sowohl Fremdkörper als auch Fehlstellen mit einer einzigen Inspektionseinheit gleichermaßen gut zu erkennen. Dadurch, dass dies mit einer einzigen Inspektionseinheit geschieht, ist ein geringerer Bauraum dafür notwendig.

Das von der Lichtaustrittsfläche abgestrahlte Licht kann zusätzlich auf Basis einer Intensitätseigenschaft örtlich kodiert sein.

Das Verfahren zur optischen Inspektion kann in einer Getränkeverarbeitungsanlage eingesetzt werden. Das Verfahren kann einem Behälterherstellungsverfahren, Reinigungsverfahren, Füll- und/oder Verschlussverfahren vorgeordnet oder nachgeordnet sein. Das Verfahren kann in einer Vollflaschen- oder Leerflascheninspektionsmaschine eingesetzt werden. Beispielsweise kann das Verfahren zur Inspektion von zurückgenommenen Mehrwegbehältern eingesetzt werden.

Die Behälter können dazu vorgesehen sein, Getränke, Nahrungsmittel, Hygieneartikel, Pasten, chemische, biologische und/oder pharmazeutische Produkte aufzunehmen. Die Behälter können als Flaschen, insbesondere als Kunststoffflaschen oder Glasflaschen ausgebildet sein. Bei Kunststoffflaschen kann es sich im speziellen um PET-, PEN-, HD-PE oder PP-Flaschen handeln. Ebenso kann es sich um biologisch abbaubare Behälter oder Flaschen handeln, deren Hauptbestandteile aus nachwachsenden Rohstoffen, wie zum Beispiel Zuckerrohr, Weizen oder Mais bestehen. Die Behälter können mit einem Verschluss versehen sein, beispielsweise mit einem Kronkorken, Schraubverschluss, Abreißverschluss oder dergleichen. Ebenso können die Behälter als Leergut vorzugsweise ohne Verschluss vorliegen.

Denkbar ist, dass das Verfahren zur Seitenwand-, Boden-, Mündungs- und/oder Inhaltskontrolle der Behälter eingesetzt wird. Bei Fremdkörpern kann es sich um Verschmutzungen, Produktreste, Reste von Etiketten und/oder dergleichen handeln. Bei Fehlstellen kann es sich beispielsweise um Beschädigungen an den Behältern, wie beispielsweise abgeplatztes Glas handeln. Ebenso ist denkbar, dass es sich um fehlerhaft produzierte Materialstellen, wie beispielsweise lokale Materialverdickungen oder Materialverjüngungen handelt.

Die Behälter können mit einem Transporteur als Behälterstrom zu der Inspektionseinheit transportiert werden. Der Transporteur kann ein Karussell und/oder einen Lineartransporteur umfassen. Denkbar ist beispielsweise, dass der Transporteur ein Förderband umfasst, auf dem die Behälter stehend in einen Bereich zwischen der Beleuchtungseinheit und der Kamera transportiert werden. Denkbar sind Container, die einen oder mehrere Behälter während des Transports halten (PUK). Der Behälter kann auch gehalten durch seitliche Riemen transportiert werden, wenn z. B. die Beleuchtung den Behälterboden durchleuchtet und die Kamera durch die Behältermündung den Boden inspiziert.

Die Beleuchtungseinheit kann das Licht mit wenigstens einer Lichtquelle erzeugen, beispielsweise mit einer Glühbirne, einer Leuchtstoffröhre oder mit wenigstens einer LED. Vorzugsweise kann das Licht mit einer Matrix aus LEDs erzeugt und in Richtung der Lichtaustrittsfläche abgestrahlt werden. Die Lichtaustrittsfläche kann größer ausgebildet sein, als die Kameraansicht des Behälters. Ebenso ist denkbar, dass die Lichtaustrittsfläche lediglich einen Teil der Kameraansicht des Behälters beleuchtet. Die Lichtaustrittsfläche kann das Licht teilweise oder vollständig diffus abstrahlen. Vorzugsweise kann die Lichtaustrittsfläche eine Streuscheibe umfassen, mit der das Licht von der wenigstens einen Lichtquelle zur Kamera hin flächig diffus gestreut wird. Mit einem Abstrahlort kann hier ein Ortspunkt oder ein flächiger Abschnitt der Lichtaustrittsfläche gemeint sein. Denkbar ist, dass die Abstrahlorte die Lichtaustrittsfläche kontinuierlich ineinander übergehen, so dass sich die Polarisationseigenschaft, der Intensitätseigenschaft und/oder der Phaseneigenschaft über die Lichtaustrittsfläche kontinuierlich verändert.

Die Kamera kann den wenigstens einen der Behälter und das darüber transmittierte oder reflektierte Licht mit einem Objektiv und mit einem Bildsensor erfassen. Der Bildsensor kann beispielsweise ein CMOS oder ein CCD-Sensor sein. Denkbar ist, dass die Kamera das wenigstens eine Kamerabild mit einer Datenschnittstelle zur Bildverarbeitungseinheit hin überträgt. Denkbar ist, dass das Licht von der Beleuchtungseinheit erzeugt wird, anschließend die Behälter durchleuchtet und dann von der Kamera erfasst wird. Die Kamera kann für jeden Bildpunkt des wenigstens einen Kamerabilds die Polarisationseigenschaft, die Intensitätseigenschaft und/oder die Phaseneigenschaft des erfassten transmittierten oder reflektierten Lichts trennen.

Die Bildverarbeitungseinheit kann das wenigstens eine Kamerabild mit einem Signalprozessor und/oder mit einer CPU und/oder GPU verarbeiten. Denkbar ist auch, dass die Bildverarbeitungseinheit dazu eine Speichereinheit, eine oder mehrere Datenschnittstelle, beispielsweise eine Netzwerkschnittstelle, eine Anzeigeeinheit und/oder eine Eingabeeinheit umfasst. Denkbar ist, dass die Bildverarbeitungseinheit das wenigstens eine Kamerabild mit Bildverarbeitungsalgorithmen auswertet, die als Computerprogrammprodukt in der Speichereinheit vorliegen.

"Dass das von der Lichtaustrittsfläche abgestrahlte Licht auf Basis einer Polarisationseigenschaft, einer Intensitätseigenschaft und/oder einer Phaseneigenschaft örtlich kodiert ist und von der Kamera derart erfasst wird, dass in dem wenigstens einen Kamerabild verschiedene Abstrahlorte der Lichtaustrittsfläche voneinander unterscheidbar sind" kann hier bedeuten, dass das Licht von der Lichtaustrittsfläche mit der Polarisationseigenschaft, der Intensitätseigenschaft und/oder der Phaseneigenschaft örtlich variierend abgestrahlt wird, sodass die verschiedenen Abstrahlorte mit der Polarisationseigenschaft, der Intensitätseigenschaft und/oder der Phaseneigenschaft jeweils unterschiedlich kodiert sind, wobei die Kamera in dem wenigstens einen Kamerabild die Polarisationseigenschaft, die Intensitätseigenschaft und/oder die Phaseneigenschaft als die Ortsinformationen erfasst.

Denkbar ist, dass die örtliche Kodierung des abgestrahlten Lichts auf Basis der Polarisationseigenschaft, der Intensitätseigenschaft und/oder der Phaseneigenschaft an eine Aufgabenstellung, insbesondere an einen Behältertyp angepasst wird. Beispielsweise können dazu Grenzen des örtlich kodierten Lichts an eine Behälterhöhe und/oder -breite angepasst werden. Anders ausgedrückt, kann der Bereich der Lichtaustrittsfläche, der mit der Polarisationseigenschaft, der Intensitätseigenschaft und/oder der Phaseneigenschaft variiert vergrößert oder verkleinert werden.

Das von der Lichtaustrittsfläche abgestrahlte Licht kann im sichtbaren Bereich und/oder im nicht sichtbaren Bereich des Wellenlängenspektrums abgestrahlt werden. Beispielsweise kann das Licht im sichtbaren Bereich für das menschliche Auge wahrnehmbar sein und/oder in einem Wellenlängenbereich von 380nm - 750nm liegen. Der nicht-sichtbare Bereich kann für das menschliche Auge nicht wahrnehmbar sein und/oder im UV- oder IR-Wellenlängenbereich liegen. Denkbar ist auch, dass der sichtbare Bereich mit dem nicht-sichtbaren Bereich kombiniert wird. Beispielsweise könnte das Licht bei Behältern aus Braunglas die Lichtaustrittsfläche mit roten und infraroten Lichtwellenlängen abgestrahlt werden.

Mit Polarisationseigenschaft kann hier gemeint sein, dass das Licht von den verschiedenen Abstrahlorten der Lichtaustrittsfläche mit jeweils unterschiedlichen Polarisationsrichtungen abgestrahlt wird. Beispielsweise kann im Bereich der Lichtaustrittsfläche ein Polarisationsfilter mit einem sich kontinuierlich verändernden Polarisationsverlauf oder mehrere Polarisationsfilter mit unterschiedlichen Orientierungen angeordnet sein, so dass sich örtlich die Polarisation des abgestrahlten Lichts ändert. Denkbar ist, dass die Kamera die Polarisationseigenschaft in dem wenigstens einen Kamerabild trennt. Dazu kann sie beispielsweise mehrere Bildsensoren mit jeweils einem unterschiedlich ausgerichteten Polarisationsfilter oder einen einzelnen Bildsensor mit einer Polarisationsfiltermatrix umfassen. Insbesondere kann die Kamera einen Sensor vom Typ Sony IMX250MZR umfassen. Mit Polarisationseigenschaft kann hier eine lineare, elliptische und/oder zirkuläre Polarisationseigenschaft gemeint sein.

Denkbar ist, dass die Bildverarbeitungseinheit das wenigstens eine Kamerabild auf Ortsinformationen der Abstrahlorte hin auswertet, um zusätzlich lokale Materialprägungen, wie beispielsweise Embossings, Glasprägungen, Perlen und dergleichen an den Behältern zu erkennen und/oder von den Fremdkörpern zu unterscheiden. Derartige Materialprägungen können beispielsweise als Dekorelemente eingesetzt werden. Die Bildverarbeitungseinheit kann das wenigstens eine Kamerabild auf Intensitätsinformationen und Ortsinformationen der Abstrahlorte hin auswerten, um Bereiche mit veränderterer Ortsinformation und veränderter Intensitätsinformation als Behälterrand zu erkennen. Da am Behälterrand sowohl eine Abdunkelung als auch eine besonders große Umlenkung der Lichtstrahlen erfolgt, kann der Behälterrand so besonders einfach erkannt werden. Beispielsweise, indem die Bildverarbeitungseinheit das wenigstens eine Kamerabild auf einen dritten lokalen Bereich mit gegenüber einer Umgebung abweichender Intensitätsinformation und abweichender Ortsinformation hin auswertet, um auf ein Vorhandensein des Behälterrands zu schließen.

Denkbar ist auch, dass das von der Lichtaustrittsfläche abgestrahlte Licht zusätzlich zu der Polarisationseigenschaft, der Intensitätseigenschaft und/oder der Phaseneigenschaft mit einer Wellenlängeneigenschaft örtlich kodiert ist. Dadurch kann beispielsweise das abgestrahlte Licht sowohl mit der Wellenlänge als auch mit der Polarisation örtlich kodiert werden. Die Kamera kann dann sowohl die Wellenlängeneigenschaft als auch die Polarisationseigenschaft in dem wenigstens einen Kamerabild trennen. Beispielsweise kann die Kamera dazu einen Sensor vom Typ Sony IMX250MYR umfassen.

Mit Intensitätseigenschaft kann hier gemeint sein, dass das Licht von den verschiedenen Abstrahlorten der Lichtaustrittsfläche mit jeweils unterschiedlichen Intensitäten oder Intensitätsverläufen abgestrahlt wird. Mit Phaseneigenschaft des abgestrahlten Lichts kann hier gemeint sein, dass dem abgestrahlten Licht ein periodischer Intensitätsverlauf, insbesondere ein sinusförmiger Intensitätsverlauf aufmoduliert wird, wobei für die verschiedenen Abstrahlorte die Phase des periodischen Intensitätsverlaufs unterschiedlich ist.

Die Bildverarbeitungseinheit kann das wenigstens eine Kamerabild auf einen ersten lokalen Bereich mit gegenüber einer Umgebung abweichender Intensitätsinformation hin auswerten, um auf das Vorhandensein eines Fremdkörpers zu schließen. Dadurch, dass Fehlstellen üblicherweise Licht absorbieren, kann sie über die abweichende Intensitätsinformation in dem wenigstens einen Kamerabild besonders einfach erkannt werden.

Die Bildverarbeitungseinheit kann das wenigstens eine Kamerabild auf einen zweiten lokalen Bereich mit gegenüber einer Umgebung abweichender Ortsinformation hin auswerten, um auf ein Vorhandensein einer Fehlstelle zu schließen. Dadurch, dass die Fehlstelle des Behälters das Licht anders umlenkt, wie umgebende Bereiche der Fehlstelle, kann sie auf diese Art und Weise besonders einfach in dem wenigstens einen Kamerabild erkannt werden. Beispielsweise kann die Fehlstelle in dem wenigstens einen Kamerabild eine andere Polarisationsinformation aufweisen, als deren Umgebung. Dies lässt dann auf eine zur Umgebung unterschiedliche Lichtbrechung und damit auf die Fehlstelle schließen.

Das wenigstens eine Kamerabild kann mit der Bildverarbeitungseinheit in einen Intensitätskanal und in einen Lichteigenschaftskanal für die Polarisationseigenschaft, die Intensitätseigenschaft und/oder die Phaseneigenschaft getrennt werden, wobei die Bildverarbeitungseinheit auf Basis des Intensitätskanals die Fremdkörper und auf Basis des Lichteigenschaftskanals die Fehlstellen erkennt. Dadurch können die Fremdkörper und die Fehlstellen in den beiden Kanälen besonders einfach getrennt ausgewertet werden. Mit Intensitätskanal kann hier ein Kanal für eine relative Helligkeit, eine absolute Helligkeit oder für eine Intensität gemeint sein.

Denkbar ist, dass das Licht von den Abstrahlorten der Lichtaustrittsfläche jeweils mit einem zeitlich unterschiedlichen Intensitätsverlauf abgestrahlt wird, um die verschiedenen Abstrahlorte als die Intensitätseigenschaft und/oder die Phaseneigenschaft zu kodieren. Dadurch können Behälter mit unterschiedlicher farblicher Transparenz besonders zuverlässig inspiziert werden. Denkbar ist, dass dabei die Phaseneigenschaft einen für die verschiedenen Abstrahlorte jeweils unterschiedlichen Zeitversatz des Intensitätsverlaufs umfasst. Mit "Zeitversatz" könnte hier ein Versatz gegenüber einem Referenzsignal gemeint sein. Anders ausgedrückt könnte der Intensitätsverlauf eine Intensitätssequenz oder einen sinusförmigen Intensitätsverlauf umfassen, wobei der Zeitversatz des Intensitätsverlaufs gegenüber einem Referenzsignal an den verschiedenen Abstrahlorten jeweils unterschiedlich gewählt wird. Denkbar ist, dass die Kamera Laufzeitunterschiede des in die Behälter transmittierten oder reflektierten Lichts erfasst, um die Phaseneigenschaft zu ermitteln. Beispielsweise sind dazu Kameras bekannt, die für jeden Bildpunkt die Laufzeit, bzw. den Phasenversatz gegenüber dem Referenzsignal des Lichts erfasst.

Zusätzlich oder alternativ ist denkbar, dass die Intensitätseigenschaft eine für die verschiedenen Abstrahlorte jeweils unterschiedliche Zeitabfolge von Lichtintensitäten des Intensitätsverlaufs umfasst. Beispielsweise könnte für die verschiedenen Abstrahlorte jeweils eine unterschiedliche Intensitätssequenz des abgestrahlten Lichts gewählt werden. Mit Intensitätssequenz kann hier beispielsweise eine Abfolge von mehreren zeitlich hintereinander liegenden Zeitabschnitten gemeint sein, wobei jeweils in einem Zeitabschnitt das Licht hell oder dunkel abgestrahlt wird.

Darüber hinaus stellt Erfindung zur Lösung der Aufgabenstellung eine Vorrichtung zur optischen Inspektion von Behältern mit den Merkmalen des Anspruchs 9 bereit. Vorteilhafte Ausführungsformen der Erfindung sind in den Unteransprüchen genannt.

Dadurch, dass die Beleuchtungseinheit dazu ausgebildet ist, das von der Lichtaustrittsfläche abgestrahlte Licht auf Basis der Polarisationseigenschaft und/oder der Phaseneigenschaft örtlich kodiert abzustrahlen und dadurch, dass die Kamera dazu ausgebildet ist, das örtlich kodierte Licht zu erfassen, kann unabhängig von der Abstrahlcharakteristik der Lichtaustrittsfläche für die Bildpunkte des Kamerabilds jeweils bestimmt werden, von welchem der Abstrahlorte der entsprechende Lichtanteil her stammt. Dadurch, dass die Bildverarbeitungseinheit dazu ausgebildet ist, das wenigstens eine Kamerabild auf Ortsinformationen der Abstrahlorte hin auszuwerten, kann beispielsweise aufgrund einer lokalen Veränderung des Abstrahlorts eine Fehlstelle von einem Fremdkörper unterschieden werden. Umgekehrt können nach wie vor die Intensitätsinformationen ausgewertet werden, um bei einer möglichst diffusen Abstrahlcharakteristik der Lichtaustrittsfläche die Absorption des Lichts durch Fremdkörper besonders gut zu erkennen. Folglich ist es mit der erfindungsgemäßen Vorrichtung möglich, sowohl Fremdkörper als auch Fehlstellen mit einer einzigen Inspektionseinheit gleichermaßen gut zu erkennen. Dadurch, dass dies mit einer einzigen Inspektionseinheit geschieht, ist ein geringerer Bauraum dafür notwendig.

Die Beleuchtungseinheit kann dazu ausgebildet sein, das von der Lichtaustrittsfläche abgestrahlte Licht zusätzlich auf Basis einer Intensitätseigenschaft örtlich zu kodieren.

Die Vorrichtung zur optischen Inspektion von Behältern kann zur Durchführung des Verfahrens nach einem der Ansprüche 1-8 ausgebildet sein. Die Vorrichtung kann die zuvor beschriebenen Merkmale, insbesondere nach einem der Ansprüche 1-8 sinngemäß umfassen.

Die Vorrichtung zur optischen Inspektion kann in einer Getränkeverarbeitungsanlage angeordnet sein. Die Getränkeverarbeitungsanlage kann Behälterbehandlungsmaschinen umfassen, insbesondere eine Behälterherstellungsmaschine, einen Rinser, einen Füller, einen Verschließer, eine Etikettiermaschine, eine Direktdruckmaschine und/oder eine Verpackungsmaschine. Denkbar ist, dass die Vorrichtung zur Inspektion einer der genannten Behälterbehandlungsmaschinen zugeordnet ist. Die Vorrichtung kann dabei zur Vollflaschen- oder Leerflascheninspektion eingesetzt werden. Denkbar ist beispielsweise, dass die Vorrichtung zur Inspektion von zurückgenommenen Mehrwegbehältern eingesetzt wird.

Die Beleuchtungseinheit kann dazu ausgebildet sein, das Licht mit der Polarisationseigenschaft, Intensitätseigenschaft und/oder Phaseneigenschaft örtlich unterschiedlich abzustrahlen. Beispielsweise kann im Bereich der Lichtaustrittsfläche ein Polarisationsfilter mit einem sich kontinuierlich verändernden Polarisationsverlauf oder mehrere Polarisationsfilter mit unterschiedlichen Orientierungen angeordnet sein, so dass sich örtlich die Polarisation des abgestrahlten Lichts ändert.

Denkbar ist, dass die Beleuchtungseinheit dazu ausgebildet ist, das Licht von den Abstrahlorten der Lichtaustrittsfläche jeweils mit einem zeitlich unterschiedlichen Intensitätsverlauf abzustrahlen, um die verschiedenen Abstrahlorte als die Intensitätseigenschaft und/oder die Phaseneigenschaft zu kodieren. Dadurch können unterschiedlich farbige Behälter besonders zuverlässig inspiziert werden.

Die Kamera kann dazu ausgebildet sein, die Polarisationseigenschaft, die Intensitätseigenschaft und/oder die Phaseneigenschaft ortsaufgelöst zu erfassen. Beispielsweise kann dies, wie zuvor in Bezug auf das Verfahren beschrieben, über Polarisationsfilter geschehen. insbesondere über eine Polarisationsfiltermatrix. Die Kamera kann als Polarisationskamera und/oder als Laufzeitkamera ausgebildet sein. Dadurch kann die Wellenlängeneigenschaft, die Polarisationseigenschaft, die Intensitätseigenschaft und/oder die Phaseneigenschaft mit geringem Aufwand ortsaufgelöst erfasst werden. Insbesondere kann die Kamera einen Sensor vom Typ Sony IMX250MZR oder IMX 250MYR umfassen.

Weitere Merkmale und Vorteile Erfindung werden nachfolgend anhand der in den Figuren dargestellten Ausführungsbeispiele näher erläutert. Dabei zeigt:
- Figur 1: ein erfindungsgemäßes Ausführungsbeispiel eines Verfahrens zur optischen Inspektion von Behältern als Flussdiagramm;
- Figur 2: ein erfindungsgemäßes Ausführungsbeispiel einer Vorrichtung zur optischen Inspektion von Behältern als perspektivische Ansicht;
- Figur 3: eine Detailansicht auf die Lichtaustrittsfläche der Beleuchtungseinheit aus der Figur 2;
- Figuren 4A - 4B: eine seitliche Ansicht der Lichtaustrittsfläche und der Kamera aus den Figuren 2 und 3 bei der Inspektion eines Fremdkörpers und einer Fehlstelle;
- Figur 5A: das Kamerabild bei der Inspektion des Fremdkörpers und der Fehlstelle nach den Figuren 4A - 4B auf Basis einer Polarisationseigenschaft;
- Figuren 5B - 5C: der Intensitätskanal G und der Lichteigenschaftskanal C des Kamerabilds I aus der Figur 5A; und
- Figuren 6A - 6B: eine Detailansicht einer weiteren Ausführungsform der Beleuchtungseinheit aus der Figur 2, wobei das Licht von den Abstrahlorten der Lichtaustrittsfläche jeweils mit einem zeitlich unterschiedlichen Intensitätsverlauf abgestrahlt wird.

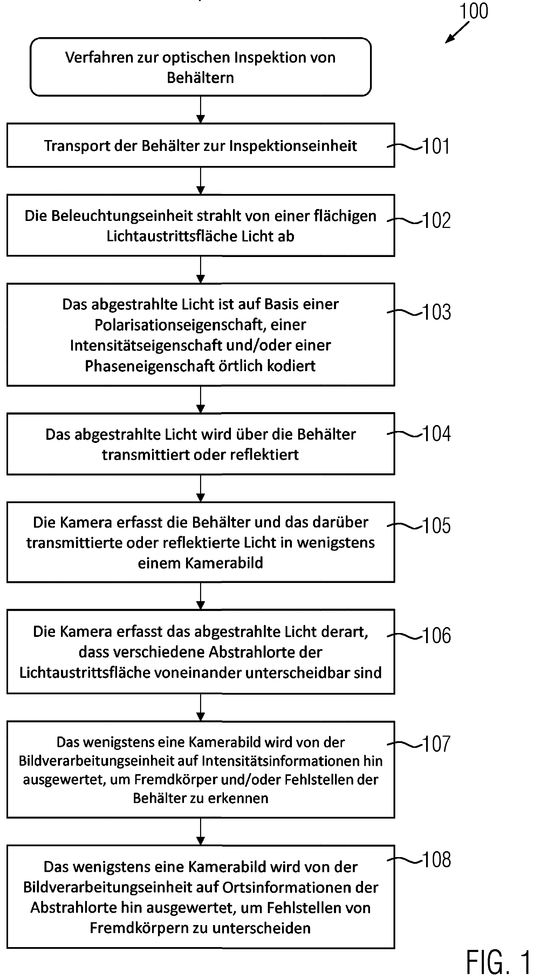

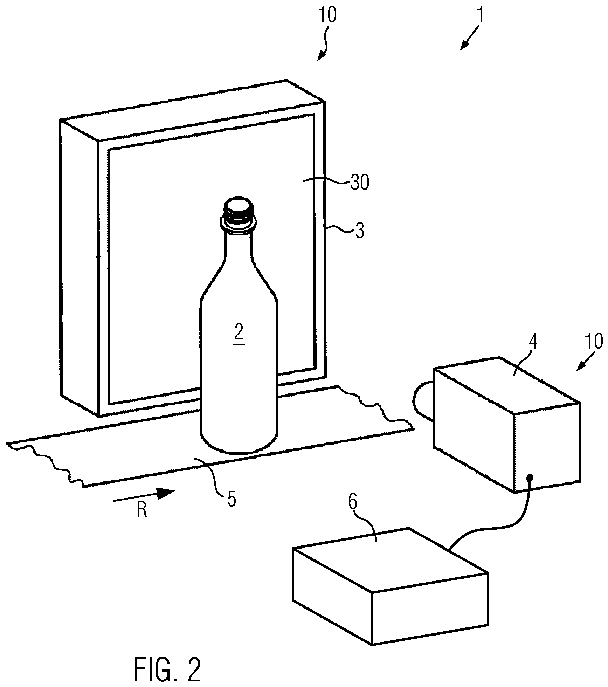

In der Figur 1 ist ein erfindungsgemäßes Ausführungsbeispiel eines Verfahrens 100 zur Inspektion von Behältern 2 als Flussdiagramm dargestellt. Das Verfahren 100 wird anhand der Figuren 2 -6B näher erläutert:
In der Figur 2 ist ein erfindungsgemäßes Ausführungsbeispiel einer Vorrichtung 1 zur optischen Inspektion von Behältern 2 als perspektivische Ansicht dargestellt. Zu sehen ist die Inspektionseinheit 10 mit der Beleuchtungseinheit 3 und mit der Kamera 4. Zwischen beiden ist der Transporteur 5 angeordnet, der hier lediglich beispielhaft als Förderband ausgebildet ist, auf dem die Behälter 2 in der Richtung R zwischen die Beleuchtungseinheit 3 und die Kamera 4 transportiert werden (Schritt 101). Exemplarisch ist lediglich ein einzelner Behälter 2 dargestellt, der gerade inspiziert wird. Dennoch werden die Behälter 2 auf dem Transporteur 5 als Behälterstrom transportiert und jeweils zwischen der Beleuchtungseinheit 3 und der Kamera 4 optisch inspiziert.

Die Beleuchtungseinheit strahlt Licht von der flächigen Lichtaustrittsfläche 30 ab, um die Behälter 2 zu durchleuchten (Schritt 102). Das abgestrahlte Licht wird über die Behälter 2 zur Kamera 4 hin transmittiert (Schritt 104). Denkbar ist auch, dass durch die Anordnung der Beleuchtungseinheit 3 gegenüber der Kamera 4 das Licht über die Behälter 2 reflektiert wird. Die Kamera 4 ist derart an der Inspektionseinheit 10 angeordnet, dass sie die Behälter 2 und darüber transmittiertes Licht in wenigstens einem Kamerabild erfasst (Schritt 105).

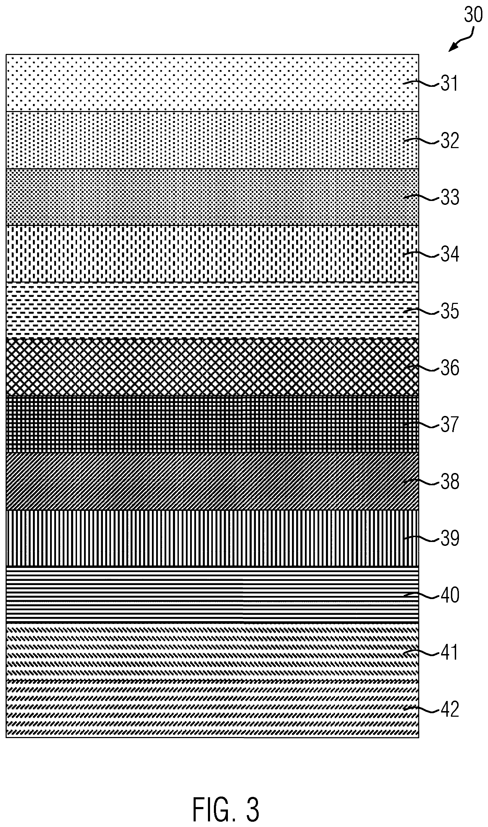

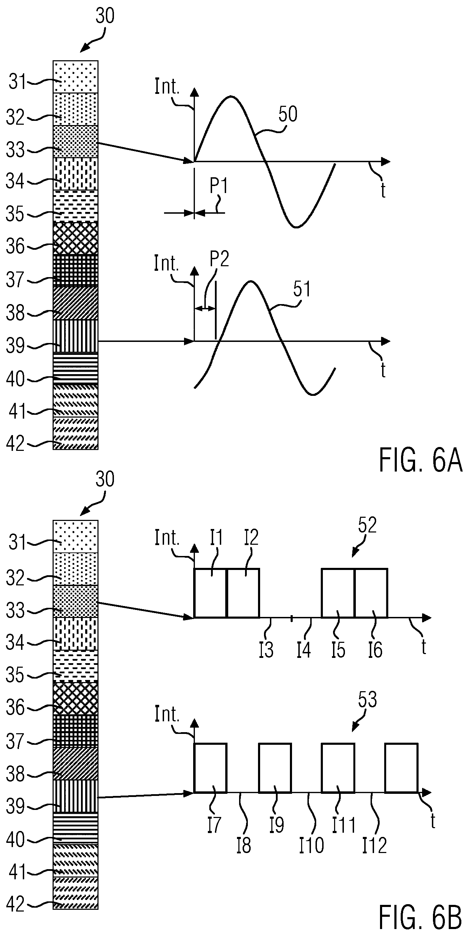

Die Beleuchtungseinheit 3 kann beispielsweise eine Matrix von LEDs umfassen, die Licht auf die Lichtaustrittsfläche 30 abstrahlen. Beispielsweise kann die Lichtaustrittsfläche 30 als Streuscheibe ausgebildet sein, um das Licht der LEDs möglichst diffus abzustrahlen. Zudem strahlt die Beleuchtungseinheit 3 das Licht von der Lichtaustrittsfläche 30 auf Basis der Polarisationseigenschaft, der Intensitätseigenschaft und/oder der Phaseneigenschaft örtlich kodiert ab (Schritt 103). Dies wird weiter unten anhand der Ausführungsbeispiele in den Figuren 3 und 6A - 6B näher erläutert. Entsprechend ist die Kamera 4 dazu ausgebildet, das örtlich kodierte Licht zu erfassen, sodass in dem wenigstens einen Kamerabild verschiedene Abstrahlorte der Lichtaustrittsfläche 30 voneinander unterscheidbar sind (Schritt 106).

Des Weiteren ist die Bildverarbeitungseinheit 6 zu sehen, mit der das wenigstens eine Kamerabild auf Intensitätsinformationen hin ausgewertet wird, um Fremdkörper und/oder Fehlstellen der Behälter zu erkennen (Schritt 107). Dies kann beispielsweise mit an sich bekannten Bildverarbeitungsalgorithmen zur Erkennung von lokalen Veränderungen in dem wenigstens einem Kamerabild geschehen.

Zudem wertet die Bildverarbeitungseinheit 6 das wenigstens eine Kamerabild auf Ortsinformationen der Abstrahlorte hin aus, um die Fehlstellen von den Fremdkörpern zu unterscheiden (Schritt 108).

Das Verfahren 100 und die Vorrichtung 1 werden im Detail nachfolgend anhand der Figuren 3 -6B genauer erläutert:
In der Figur 3 ist eine Detailansicht auf die Lichtaustrittsfläche 30 aus der Figur 2 dargestellt. Im Detail sind die verschiedenen Abstrahlorte 31-42 der Lichtaustrittsfläche 30 zu sehen, die auf Basis der Polarisationseigenschaft, der Intensitätseigenschaft und/oder der Phaseneigenschaft örtlich kodiert sind.

Beispielsweise handelt es sich um eine Polarisationseigenschaft, sodass die verschiedenen Abstrahlorte 31 - 42 mit jeweils unterschiedlicher Polarisationsrichtung Licht abstrahlen. Denkbar ist zum Beispiel, dass der Abstrahlort 31 Licht mit einer Polarisationsrichtung von 0°, der Abstrahlort 34 mit 45°, der Abstrahlort 37 mit 90° und der Abstrahlort 40 mit 135° abstrahlen. Entsprechen liegen die Polarisationsrichtungen der Abstrahlorte 23, 33, 35, 36, 38, 39 interpoliert dazwischen bzw. sind die der Abstrahlorte 41 - 42 davon extrapoliert. Die Verteilung der Polarisationsrichtungen über die Leuchtfläche ist beispielhaft. Sie kann ebenso diskontinuierlich, heißt mit abrupten Polarisationsrichtungsänderungen oder mit sich wiederholendem Muster der Polarisationsrichtungen ausgebildet sein.

Um die verschiedenen Abstrahlorte 31 - 42 zu erfassen und als Ortsinformation in dem wenigsten einen Kamerabild zu speichern, ist die Kamera 4 bei diesem Ausführungsbeispiel als Polarisationskamera mit einem Bildsensor vom Typ Sony IMX250MZR ausgebildet.

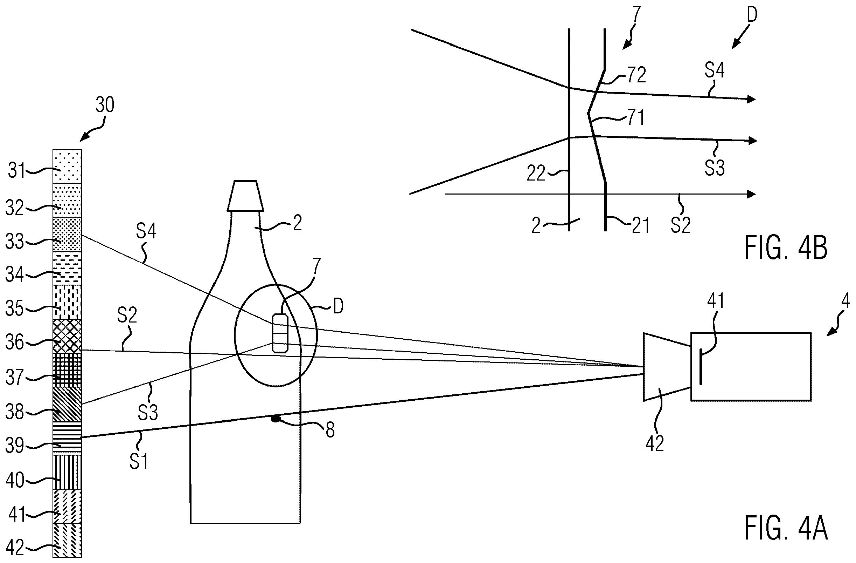

In den Figuren 4A - 4B ist eine seitliche Ansicht der Lichtaustrittsfläche 30 und der Kamera 4 aus den Figuren 2 und 3 bei der Inspektion eines Fremdkörpers 8 und einer Fehlstelle 7 dargestellt. In der Figur 4B ist das Detail D der Figur 4A gezeigt.

Zu sehen ist die flächig abstrahlende Lichtaustrittsfläche 30 mit den verschiedenen Abstrahlorten 31-42 in einem seitlichen Profil. Davon wird das Licht in Richtung der Kamera 4 flächig abstrahlt und durchleuchtet so den Behälter 2. Der Behälter 2 besteht hier beispielsweise aus einem transparenten Glasmaterial, sodass das Licht durch den Behälter 2 hindurch transmittiert wird.

Die Kamera 4 umfasst den Bildsensor 41 und das Objektiv 42, um den Behälter 2 in wenigstens einem Kamerabild zu erfassen. Denkbar ist, dass die Kamera 4 als Polarisationskamera und/oder Laufzeitkamera ausgebildet ist.

Zu sehen ist weiter der Lichtstrahl S1, der ausgehend von dem Abstrahlort 39 den Behälter 2 durchleuchtet. Er trifft dabei auf den Fremdkörper 8, der einen Teil seiner Energie absorbiert. Folglich erscheint der Fremdkörper 8 in dem wenigstens einen Kamerabild der Kamera 4 mit gegenüber seiner unmittelbaren Umgebung verringerter Intensität. Dadurch, dass der Fremdkörper den Lichtstrahl S1 nicht umgelenkt, erscheint er in dem wenigstens einen Kamerabild mit derselben Polarisationseigenschaft, Intensitätseigenschaft und/oder Phaseneigenschaft des Abstrahlorts 39, wie seine unmittelbare Umgebung.

Weiterhin ist der Lichtstrahl S2 zu sehen, der ausgehend von dem Abstrahlort 36 den Behälter 2 in einer Umgebung der Fehlstelle 7 durchleuchtet. Hier wird das Licht abhängig vom Material des Behälters 2 nur in einem geringen Maße absorbiert, sodass der entsprechende Bildpunkt in dem wenigstens einen Kamerabild mit einer hohen Intensität und der Polarisationseigenschaft, der Intensitätseigenschaft und/oder der Phaseneigenschaft des Abstrahlorts 36 erscheint. Wie zudem in der Figur 4B zu sehen ist, durchläuft der Lichtstrahl S2 den Behälter 2 an einer Stelle, an der die Behälterinnenwand 22 und die Behälteraußenwand 21 planparallel zueinander verlaufen. Folglich erfährt der Lichtstrahl S2 je nach Auftreffwinkel lediglich einen geringfügigen Versatz, jedoch keine Richtungsänderung. Folglich erscheint der entsprechende Bildpunkt in dem wenigstens einen Kamerabild mit hoher Intensität und der Polarisationseigenschaft, der Intensitätseigenschaft und/oder der Phaseneigenschaft des Abstrahlorts 36.

Demgegenüber ist in der Figur 4B zu sehen, dass die Fehlstelle 7 lokale Kerbflächen 71, 72 an der Behälteraußenwand 21 aufweist. Dies kann beispielsweise eine Kerbe aufgrund eines Abplatzers sein. Folglich werden die Lichtstrahlen S3, S4 an den lokalen Kerbflächen 71, 72 durch Lichtbrechung umgelenkt. Genauer wird der Lichtstrahl S3 vom Abstrahlort 38 abgestrahlt und beim Durchlaufen des Behälters 2 an der ersten Kerbfläche 71 durch Lichtbrechung zur Kamera 4 hin umgelenkt. Dagegen durchläuft der Lichtstrahl S4 ausgehend vom Abstrahlort 33 den Behälter 2 und wird an der zweiten Kerbfläche 72 durch Lichtbrechung zur Kamera 4 hin umgelenkt. Demnach erscheint die Fehlstelle 7 durch die lokale Lichtbrechung an den Kerbflächen 71, 72 in dem wenigstens einen Kamerabild mit zur Umgebung unterschiedlicher Polarisationseigenschaft, Intensitätseigenschaft und/oder Phaseneigenschaft.

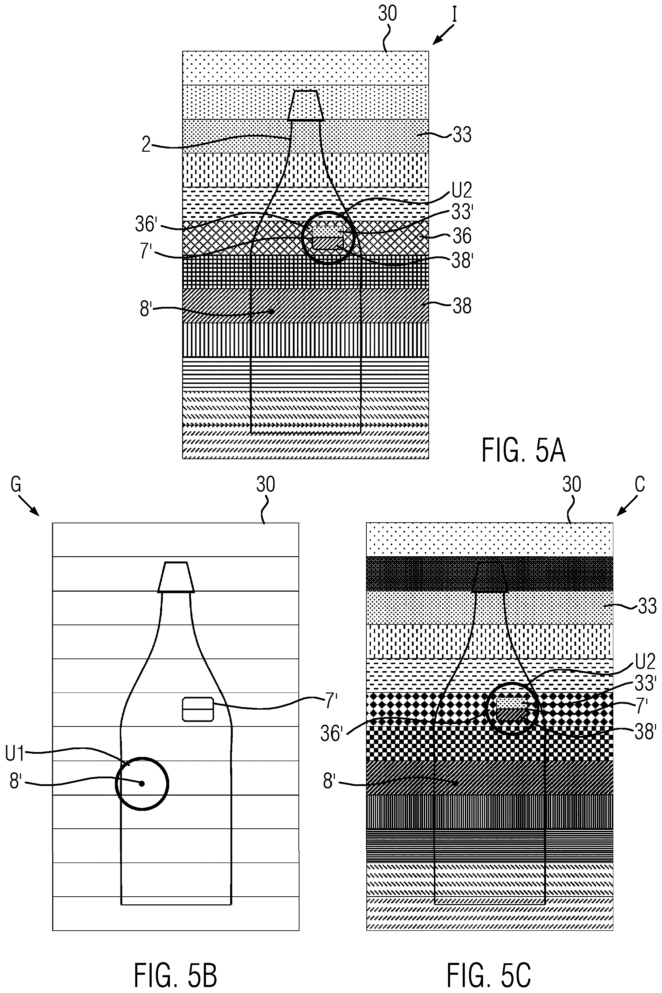

Figur 5A ist ein Kamerabild I bei der Inspektion des Fremdkörpers 8 und der Fehlstelle 7 auf Basis der Polarisationseigenschaft genauer dargestellt.

Zu sehen ist, dass der Behälter 2 im Kamerabild I vor der Lichtaustrittsfläche 30 erscheint. Des Weiteren ist zu sehen, dass der Fremdkörper 8 als verdunkelter, erster lokaler Bereich 8' abgebildet wird. Demgegenüber wird die Fehlstelle 7 als zweiter lokaler Bereich 7' mit einer gegenüber der unmittelbaren Umgebung ähnlichen Intensität abgebildet, jedoch erscheint er dort im oberen Bereich mit der Ortsinformation 33' des Abstrahlorts 33 und im unteren Bereich mit der Ortsinformation 38' des Abstrahlorts 38, da die Strahlen, wie in der Figur 4A gezeigt, lokal durch die Fehlstelle 7 abgelenkt werden.

In den Figuren 5B - 5C sind der Intensitätskanal G und der Lichteigenschaftskanal C des Kamerabilds I aus der Figur 5A dargestellt. Der Lichteigenschaftskanal C ist für die Polarisationseigenschaft, die Intensitätseigenschaft und/oder die Phaseneigenschaft vorgesehen.

Die in der Figur 2 dargestellte Bildverarbeitungseinheit 6 trennt zunächst das in der Figur 5A dargestellt Kamerabild I in den Intensitätskanal G und in den Lichteigenschaftskanal C auf. Da in diesem Ausführungsbeispiel die Lichtaustrittsfläche das Licht auf Basis der Polarisationseigenschaft abstrahlt und die Kamera 4 die Polarisationsrichtungen als Ortsinformation erfasst, ist der Lichteigenschaftskanal C ein Polarisationskanal.

Die Bildverarbeitungseinheit 6 wertet anschließend den Intensitätskanal G des Kamerabilds I auf den ersten lokalen Bereich 8' mit gegenüber der Umgebung U1 abweichender Intensitätsinformation hin aus, um auf das Vorhandensein des Fremdkörpers 8 zu schließen. Beispielsweise geschieht dies mittels eines Filters zur Erkennung von Helligkeitsschwankungen.

Des Weiteren wertet die Bildverarbeitungseinheit 6 den Lichteigenschaftskanal C des Kamerabild I mit der Polarisation auf den zweiten lokalen Bereich 7' mit gegenüber der Umgebung U2 abweichenden Ortsinformation hin aus. Wie in der Figur 5C zu sehen ist, erscheint der lokale Bereich 7' der Fehlstelle 7 im oberen Bereich mit der Ortsinformation 33'und im unteren Bereich mit der Ortsinformation 38'. Dagegen weist die unmittelbare Umgebung U2 die Ortsinformation 36' des Abstrahlorts 36 auf. Da also der zweite lokale Bereich 7' eine andere Ortsinformation 33', 38' aufweist, als seine Umgebung U2, kann die Fehlstelle 7 von dem Fremdkörper 8 unterschieden werden.

Nach dem Erkennen des Fremdkörpers 8 und/oder der Fehlstelle 7 wird von der Bildverarbeitungseinheit 6 ein Signal erzeugt, dass der Behälter 2 den Fremdkörper 8 bzw. die Fehlstelle 7 aufweist. Aufgrund des Signals kann beispielsweise eine Weiche gesteuert werden, um nach der Inspektion den betroffenen Behälter 2 zu einer erneuten Reinigung oder zum Recyceln auszuschleusen.

In den Figuren 6A - 6B ist eine Detailansicht einer weiteren Ausführungsform der Beleuchtungseinheit 3 aus der Figur 2 dargestellt, wobei das Licht von den Abstrahlorten 31 - 42 der Lichtaustrittsfläche 30 jeweils mit einem zeitlich unterschiedlichen Intensitätsverlauf abgestrahlt wird.

Zu sehen ist in der Figur 6A, dass der Abstrahlort 33 Licht mit einem sinusförmigen Intensitätsverlauf 50 abstrahlt, der gegenüber einer Zeitreferenz oder einem Referenzsignal einen Zeitversatz P1 = 0 aufweist. Demgegenüber verläuft zwar der Intensitätsverlauf des Abstrahlorts 39 ebenfalls sinusförmig, weist jedoch gegenüber der Zeitreferenz oder dem Referenzsignal einen anderen Zeitversatz P2 auf. Die Intensitätsverläufe der beiden Abstrahlorte 33, 39 sind hier lediglich beispielhaft herausgegriffen. Alle anderen Abstrahlorte 31, 32, 34-38, 40-42 weisen ebenfalls einen sinusförmigen Intensitätsverlauf auf, jedoch mit einem jeweils unterschiedlichen Zeitversatz. Dies entspricht einer jeweils unterschiedlichen Phase des sinusförmigen Zeitverlaufs, so dass das von der Lichtaustrittsfläche 30 abgestrahlte Licht auf Basis der Phaseneigenschaft örtlich kodiert ist.

Um die unterschiedlichen Phasen bzw. Zeitversätze der verschiedenen Abstrahlorte 31-42 in einem Kamerabild zu erfassen, werden mit der Kamera 4 Laufzeitunterschiede des über die Behälter 2 transmittierten Lichts erfasst, um für die Bildpunkte des Kamerabilds jeweils die Phaseneigenschaft zu ermitteln. Anders ausgedrückt ist hier die Kamera 4 als Laufzeitkamera ausgebildet. Denkbar ist, dass die Kamera für die Bildpunkte jeweils den Zeitversatz gegenüber der Zeitreferenz oder dem Referenzsignal erfasst. Dieser Zeitversatz entspricht dann der Ortsinformation, die dann, wie zuvor dargestellt, mit der Bildverarbeitungseinheit 6 ausgewertet wird, um die Fehlstellen 7 von den Fremdkörpern 8 zu unterscheiden.

Demgegenüber ist in der Figur 6B zu sehen, dass das Licht von den Abstrahlorten 31-42 der Lichtaustrittsfläche 30 jeweils mit einem unterschiedlichen Intensitätsverlauf 52, 53 abgestrahlt wird, wobei die Intensitätsläufe 52, 53 jeweils eine unterschiedliche Abfolge von Intensitätsstufen I1 - I6 bzw. I7 - I12 aufweisen. Beispielsweise weist der erste Intensitätsverlauf 52 abwechselnd zwei helle und zwei dunkle Intensitätsstufen I1 - I6 auf. Dagegen weist der zweite Intensitätsverlauf 53 abwechselnd eine helle und eine dunkle Intensitätsstufe I7 - I12 auf. Die Intensitätsläufe 52, 53 der Abstrahlorte 33 und 39 sind hier lediglich beispielhaft herausgegriffen. Anders ausgedrückt strahlen die verschiedenen Abstrahlorte 31-42 jeweils unterschiedliche Zeitabfolgen von Intensitätsstufen ab, sodass diese auf Basis der Intensitätseigenschaft kodiert sind.

Die unterschiedlichen Intensitätsverläufe 52, 53 werden mittels der Kamera 4 in einer Sequenz von Kamerabildern erfasst und als Ortsinformation der Abstrahlorte 31-42 mit der Bildverarbeitungseinheit 6 ausgewertet, um die Fehlstellen 7 von den Fremdkörpern 8 unterscheiden.

In Analogie zu den Figuren 5A - 5C weist nach der Auswertung der zweite lokale Bereich 7' einen gegenüber der Umgebung U2 abweichenden Intensitätsverlauf (oder mehrere abweichende Intensitätsverläufe) auf, was einer unterschiedlichen Ortsinformation entspricht und es kann so auf das Vorhandensein der Fehlstelle 7 geschlossen werden.

Dadurch, dass bei den Ausführungsbeispielen in den Figuren 1 - 6B die Beleuchtungseinheit 3 dazu ausgebildet ist, das von der Lichtaustrittsfläche 30 abgestrahlte Licht auf Basis der Polarisationseigenschaft, der Intensitätseigenschaft und/oder der Phaseneigenschaft örtlich kodiert abzustrahlen und dadurch, dass die Kamera 4 dazu ausgebildet ist, das örtlich kodierte Licht zu erfassen, kann für die Bildpunkte des Kamerabilds unabhängig von der Abstrahlcharakteristik der Lichtaustrittsfläche 30 bestimmt werden, von welchem der Abstrahlorte 31 - 42 der entsprechende Lichtanteil her stammt. Dadurch, dass die Bildverarbeitungseinheit 6 dazu ausgebildet ist, das wenigstens eine Kamerabild auf Ortsinformationen der Abstrahlorte 31 - 42 hin auszuwerten, kann beispielsweise aufgrund einer lokalen Veränderung des Abstrahlorts 33, 38 eine Fehlstelle 7 von einem Fremdkörper 8 unterschieden werden. Umgekehrt können nach wie vor die Intensitätsinformationen ausgewertet werden, um bei einer möglichst diffusen Abstrahlcharakteristik der Lichtaustrittsfläche 30 die Absorption des Lichts durch Fremdkörper 7 besonders gut zu erkennen. Folglich ist es mit dem erfindungsgemäßen Verfahren 100 bzw. mit der erfindungsgemäßen Vorrichtung 1 möglich, sowohl Fremdkörper 7 als auch Fehlstellen 8 mit einer einzigen Inspektionseinheit 10 gleichermaßen gut zu erkennen. Dadurch, dass dies mit einer einzigen Inspektionseinheit 10 geschieht, ist ein geringerer Bauraum dafür notwendig.

Es versteht sich, dass in den zuvor beschriebenen Ausführungsbeispielen genannte Merkmale nicht auf diese Merkmalskombination beschränkt sind, sondern nur auf die Merkmalskombination der beigefügten Patentansprüche.

## Patentansprüche

1. Verfahren (100) zur optischen Inspektion von Behältern (2), wobei die Behälter (2) zu einer Inspektionseinheit (10) mit einer Beleuchtungseinheit (3) und mit einer Kamera (4) transportiert werden (101), wobei die Beleuchtungseinheit (3) von einer flächigen Lichtaustrittsfläche (30) Licht abstrahlt (102), wobei das Licht über die Behälter (2) transmittiert oder reflektiert wird (104), wobei die Kamera (4) jeweils wenigstens einen der Behälter (2) und das darüber transmittierte oder reflektierte Licht in wenigstens einem Kamerabild (I) erfasst (105), und wobei das wenigstens eine Kamerabild (I) mit einer Bildverarbeitungseinheit (6) auf Intensitätsinformationen hin ausgewertet wird, um Fremdkörper (8) und/oder Fehlstellen (7) der Behälter zu erkennen (107), wobei das von der Lichtaustrittsfläche (30) abgestrahlte Licht von der Kamera (4) derart erfasst wird, dass in dem wenigstens einen Kamerabild (I) verschiedene Abstrahlorte (31 - 42) der Lichtaustrittsfläche (30) voneinander unterscheidbar sind (106),
wobei das von der Lichtaustrittsfläche (30) abgestrahlte Licht auf Basis einer Polarisationseigenschaft und/oder einer Phaseneigenschaft örtlich kodiert ist (103), und
wobei die Bildverarbeitungseinheit (6) das wenigstens eine Kamerabild (I) auf Ortsinformationen der Abstrahlorte (31 - 42) hin auswertet, um die Fehlstellen (7) von den Fremdkörpern (8) zu unterscheiden (108).

2. Verfahren (100) nach Anspruch 1, wobei das Licht von der Lichtaustrittsfläche (30) mit der Polarisationseigenschaft und/oder der Phaseneigenschaft örtlich unterschiedlich abgestrahlt wird, so dass die verschiedenen Abstrahlorte (31 - 42) mit der Polarisationseigenschaft und/oder der Phaseneigenschaft jeweils unterschiedlich kodiert sind, und wobei die Kamera (4) in dem wenigstens einen Kamerabild (I) die Polarisationseigenschaft und/oder die Phaseneigenschaft als die Ortsinformationen erfasst.

3. Verfahren (100) nach Anspruch 1 oder 2, wobei die Bildverarbeitungseinheit (6) das wenigstens eine Kamerabild (I) auf einen ersten lokalen Bereich (8') mit gegenüber einer Umgebung (U1) abweichender Intensitätsinformation hin auswertet, um auf ein Vorhandensein eines Fremdkörpers (8) zu schließen.

4. Verfahren (100) nach einem der vorangegangenen Ansprüche, wobei die Bildverarbeitungseinheit (6) das wenigstens eine Kamerabild (I) auf einen zweiten lokalen Bereich (7') mit gegenüber einer Umgebung (U2) abweichender Ortsinformation hin auswertet, um auf ein Vorhandensein einer Fehlstelle (7) zu schließen.

5. Verfahren (100) nach einem der vorangegangenen Ansprüche, wobei das wenigstens eine Kamerabild (I) mit der Bildverarbeitungseinheit (6) in einen Intensitätskanal (G) und in einen Lichteigenschaftskanal (C) für die Polarisationseigenschaft und/oder die Phaseneigenschaft getrennt wird, und wobei die Bildverarbeitungseinheit (6) auf Basis des Intensitätskanals (G) die Fremdkörper (8) und auf Basis des Lichteigenschaftskanals (C) die Fehlstellen (7) erkennt.

6. Verfahren (100) nach einem der vorangegangenen Ansprüche, wobei das Licht von den Abstrahlorten (31 - 42) der Lichtaustrittsfläche (30) jeweils mit einem zeitlich unterschiedlichen Intensitätsverlauf (50 - 53) abgestrahlt wird, um die verschiedenen Abstrahlorte als die Phaseneigenschaft zu kodieren.

7. Verfahren (100) nach Anspruch 6, wobei die Phaseneigenschaft einen für die verschiedenen Abstrahlorte (31 - 42) jeweils unterschiedlichen Zeitversatz (P1, P2) des Intensitätsverlaufs (50, 51) umfasst.

8. Verfahren (100) nach -Anspruch 6 oder 7, wobei die Kamera (4) Laufzeitunterschiede des über die Behälter (2) transmittierten oder reflektierten Lichts erfasst, um die Phaseneigenschaft zu ermitteln.

9. Vorrichtung (1) zur optischen Inspektion von Behältern, insbesondere zur Durchführung des Verfahrens (100) nach einem der Ansprüche 1 - 8, umfassend
eine Inspektionseinheit (10) mit einer Beleuchtungseinheit (3) und mit einer Kamera (4),
eine Bildverarbeitungseinheit (6) zur Verarbeitung von wenigstens einem Kamerabild (I) der Kamera,
einen Transporteur (5) zum Transport der Behälter (2) zu der Inspektionseinheit (10),
wobei die Beleuchtungseinheit (3) dazu ausgebildet ist, Licht mit einer flächigen Lichtaustrittsfläche (30) örtlich kodiert abzustrahlen, um die Behälter (2) zu beleuchten und/oder zu durchleuchten,
wobei die Kamera (4) derart an der Inspektionseinheit (10) angeordnet ist, dass sie jeweils wenigstens einen der Behälter (2) und darüber transmittiertes oder reflektiertes Licht in dem wenigstens einen Kamerabild (I) erfasst,
wobei die Bildverarbeitungseinheit (6) dazu ausgebildet ist, das wenigstens eine Kamerabild (I) auf Intensitätsinformationen hin auszuwerten, um Fremdkörper (8) und/oder Fehlstellen (7) der Behälter (2) zu erkennen,
wobei die Kamera (4) dazu ausgebildet ist, das örtlich kodierte Licht zu erfassen, so dass in dem wenigstens einen Kamerabild (I) verschiedene Abstrahlorte (31 - 42) der Lichtaustrittsfläche (30) voneinander unterscheidbar sind,
wobei die Beleuchtungseinheit (3) dazu ausgebildet ist, das Licht von der Lichtaustrittsfläche (30) auf Basis einer Polarisationseigenschaft und/oder einer Phaseneigenschaft örtlich kodiert abzustrahlen, und
wobei die Bildverarbeitungseinheit (6) dazu ausgebildet ist, das wenigstens eine Kamerabild (I) auf Ortsinformationen der Abstrahlorte (31 - 42) hin auszuwerten, um die Fehlstellen (7) von den Fremdkörpern (8) zu unterscheiden.

10. Vorrichtung (1) nach Anspruch 9, wobei die Kamera (4) dazu ausgebildet ist, die Polarisationseigenschaft und/oder die Phaseneigenschaft ortsaufgelöst zu erfassen.

11. Vorrichtung (1) nach Anspruch 9 oder 10, wobei die Beleuchtungseinheit (3) dazu ausgebildet ist, das Licht von den Abstrahlorten (31 - 42) der Lichtaustrittsfläche (30) jeweils mit einem zeitlich unterschiedlichen Intensitätsverlauf (50 - 53) abzustrahlen, um die verschiedenen Abstrahlorte (31 - 42) als die Phaseneigenschaft zu kodieren.

12. Vorrichtung (1) nach einem der Ansprüche 9 - 11, wobei die Kamera (4) als Polarisationskamera und/oder als Laufzeitkamera ausgebildet ist.

## Claims

1. Method (100) for optically inspecting containers (2), wherein the containers (2) are transported (101) to an inspection unit (10) with an illumination unit (3) and with a camera (4), wherein the illumination unit (3) emits light (102) from a flat light-emitting surface (30), wherein the light is transmitted or reflected (104) via the containers (2), wherein the camera (4) detects (105) at least one of the containers (2) and the light transmitted or reflected thereover in at least one camera image (I), and wherein the at least one camera image (I) is evaluated by an image processing unit (6) for intensity information in order to detect (107) foreign bodies (8) and/or defects (7) in the containers, wherein the light emitted by the light-emitting surface (30) is detected by the camera (4) in such a way that different emission locations (31-42) of the light-emitting surface (30) can be distinguished from one another (106) in the at least one camera image (I),
where
the light emitted by the light-emitting surface (30) is locally coded (103) on the basis of a polarization property and/or a phase property, and
wherein the image processing unit (6) evaluates the at least one camera image (I) with regard to location information of the emission points (31-42) in order to distinguish (108) the defects (7) from the foreign bodies (8).

2. Method (100) according to claim 1, wherein the light is emitted from the light-emitting surface (30) with the polarization property and/or the phase property in a spatially different manner, so that the different emission locations (31-42) with the polarization property and/or the phase property are each coded differently, and wherein the camera (4) detects the polarization property and/or the phase property as the location information in the at least one camera image (I).

3. Method (100) according to claim 1 or 2, wherein the image processing unit (6) evaluates the at least one camera image (I) on a first local area (8') with intensity information that differs from that of a surrounding area (U1) in order to conclude that a foreign object (8) is present.

4. Method (100) according to one of the preceding claims, wherein the image processing unit (6) evaluates the at least one camera image (I) for a second local area (7') with location information that differs from an environment (U2) in order to conclude that a defect (7) is present.

5. Method (100) according to one of the preceding claims, wherein the at least one camera image (I) is separated by the image processing unit (6) into an intensity channel (G) and a light property channel (C) for the polarization property and/or the phase property, and wherein the image processing unit (6) detects the foreign bodies (8) on the basis of the intensity channel (G) and the defects (7) on the basis of the light property channel (C).

6. Method (100) according to one of the preceding claims, wherein the light is emitted from the emission locations (31-42) of the light-emitting surface (30) with a temporally different intensity curve (50-53) in order to encode the different emission locations as the phase property.

7. Method (100) according to claim 6, wherein the phase property comprises a time offset (P1, P2) of the intensity curve (50, 51) that is different for the different emission locations (31-42).

8. Method (100) according to claim 6 or 7, wherein the camera (4) detects time differences of the light transmitted or reflected via the containers (2) in order to determine the phase property.

9. Device (1) for the optical inspection of containers, in particular for carrying out the method (100) according to one of claims 1 to 8, comprising
an inspection unit (10) with an illumination unit (3) and with a camera (4),
an image processing unit (6) for processing at least one camera image (I) from the camera,
a carrier (5) for transporting the containers (2) to the inspection unit (10),
wherein the illumination unit (3) is designed to emit light with a flat light-emitting surface (30) in a spatially coded manner in order to illuminate and/or transmit light through the containers (2),
wherein the camera (4) is arranged on the inspection unit (10) in such a way that it detects at least one of the containers (2) and transmitted or reflected light thereover in the at least one camera image (I),
wherein the image processing unit (6) is designed to evaluate the at least one camera image (I) for intensity information in order to detect foreign bodies (8) and/or defects (7) in the containers (2),
wherein the camera (4) is designed to detect the spatially coded light so that different emission locations (31-42) of the light-emitting surface (30) can be distinguished from one another in the at least one camera image (I),
wherein
the illumination unit (3) is designed to emit the light from the light-emitting surface (30) in a spatially coded manner based on a polarization property and/or a phase property, and
wherein the image processing unit (6) is designed to evaluate the at least one camera image (I) with regard to location information of the emission points (31-42) in order to distinguish the defects (7) from the foreign bodies (8).

10. Device (1) according to claim 9, wherein the camera (4) is designed to detect the polarization property and/or the phase property in a spatially resolved manner.

11. Device (1) according to claim 9 or 10, wherein the illumination unit (3) is designed to emit the light from the emission locations (31-42) of the light-emitting surface (30) with a temporally different intensity curve (50-53) in each case in order to encode the different emission locations (31-42) as the phase property.

12. Device (1) according to any of claims 9-11, wherein the camera (4) is designed as a polarization camera and/or as a time-of-flight camera.

## Revendications

1. Procédé (100) d'inspection optique de récipients (2), les récipients (2) étant transportés (101) vers une unité d'inspection (10) avec une unité d'éclairage (3) et avec une caméra (4), l'unité d'éclairage (3) émettant (102) de la lumière depuis une surface de sortie de lumière (30) plane, la lumière étant transmise ou réfléchie (104) sur les récipients (2), la caméra (4) saisissant (105) respectivement au moins l'un des récipients (2) et la lumière transmise ou réfléchie sur celui-ci dans au moins une image de caméra (I), et l'au moins une image de caméra (I) étant évaluée avec une unité de traitement d'image (6) en fonction d'informations d'intensité, afin de détecter des corps étrangers (8) et/ou des défauts (7) des récipients (107), la lumière émise par la surface de sortie de lumière (30) étant détectée par la caméra (4) de telle sorte que différents emplacements d'émission (31-42) de la surface de sortie de lumière (30) peuvent être distingués les uns des autres dans l'au moins une image de caméra (I) (106),
dans lequel la lumière émise par la surface de sortie de lumière (30) est localement codée (103) sur la base d'une propriété de polarisation et/ou d'une propriété de phase, et
l'unité de traitement d'image (6) évaluant l'au moins une image de caméra (I) en fonction d'informations de lieu des emplacements d'émission (31-42), afin de distinguer (108) les défauts (7) des corps étrangers (8).

2. Procédé (100) selon la revendication 1, dans lequel la lumière est émise par la surface de sortie de lumière (30) avec la propriété de polarisation et/ou la propriété de phase localement différentes, de sorte que les différents emplacements d'émission (31-42) sont codés respectivement différemment avec la propriété de polarisation et/ou la propriété de phase, et dans lequel la caméra (4) détecte dans l'au moins une image de caméra (I) la propriété de polarisation et/ou la propriété de phase en tant qu'informations de localisation.

3. Procédé (100) selon la revendication 1 ou 2, dans lequel l'unité de traitement d'image (6) évalue l'au moins une image de caméra (I) sur une première zone locale (8') avec une information d'intensité différente par rapport à un environnement (U1), afin de conclure à la présence d'un corps étranger (8).

4. Procédé (100) selon l'une des revendications précédentes, dans lequel l'unité de traitement d'image (6) évalue l'au moins une image de caméra (I) sur une deuxième zone locale (7') avec une information de lieu différente par rapport à un environnement (U2), afin de conclure à la présence d'un défaut (7).

5. Procédé (100) selon l'une des revendications précédentes, dans lequel la au moins une image de caméra (I) est séparée avec l'unité de traitement d'image (6) en un canal d'intensité (G) et en un canal de propriété de lumière (C) pour la propriété de polarisation et/ou la propriété de phase, et dans lequel l'unité de traitement d'image (6) reconnaît les corps étrangers (8) sur la base du canal d'intensité (G) et les défauts (7) sur la base du canal de propriété de lumière (C).

6. Procédé (100) selon l'une quelconque des revendications précédentes, dans lequel la lumière est émise par les emplacements d'émission (31-42) de la surface de sortie de lumière (30), chacun avec une courbe d'intensité (50-53) différente dans le temps, afin de coder les différents emplacements d'émission comme la propriété de phase.

7. Procédé (100) selon la revendication 6, dans lequel la propriété de phase comprend un décalage temporel (P1, P2) de la courbe d'intensité (50, 51), respectivement différent pour les différents emplacements d'émission (31-42).

8. Procédé (100) selon la revendication 6 ou 7, dans lequel la caméra (4) détecte des différences de temps de parcours de la lumière transmise ou réfléchie par les récipients (2) afin de déterminer la propriété de phase.

9. Dispositif (1) pour l'inspection optique de récipients, en particulier pour la mise en œuvre du procédé (100) selon l'une des revendications 1 à 8, comprenant
une unité d'inspection (10) avec une unité d'éclairage (3) et avec une caméra (4),
une unité de traitement d'image (6) pour le traitement d'au moins une image de caméra (I) de la caméra,
un transporteur (5) pour transporter les récipients (2) vers l'unité d'inspection (10),
l'unité d'éclairage (3) étant conçue pour émettre de la lumière avec une surface de sortie de lumière (30) plane codée localement, afin d'éclairer et/ou d'illuminer les récipients (2),
dans lequel la caméra (4) est disposée sur l'unité d'inspection (10) de telle sorte qu'elle détecte respectivement au moins l'un des récipients (2) et la lumière transmise ou réfléchie sur celui-ci dans la au moins une image de caméra (I),
l'unité de traitement d'image (6) étant conçue pour évaluer l'au moins une image de caméra (I) en fonction d'informations d'intensité, afin de détecter des corps étrangers (8) et/ou des défauts (7) des récipients (2),
la caméra (4) étant conçue pour détecter la lumière codée localement, de sorte que différents emplacements d'émission (31-42) de la surface de sortie de lumière (30) peuvent être distingués les uns des autres dans l'au moins une image de caméra (I),
dans lequel l'unité d'éclairage (3) est adaptée pour émettre la lumière de la surface de sortie de lumière (30) de manière localement codée sur la base d'une propriété de polarisation et/ou d'une propriété de phase, et
l'unité de traitement d'image (6) étant conçue pour évaluer l'au moins une image de caméra (I) en fonction d'informations de lieu des emplacements d'émission (31-42), afin de distinguer les défauts (7) des corps étrangers (8).

10. Dispositif (1) selon la revendication 9, dans lequel la caméra (4) est conçue pour détecter la propriété de polarisation et/ou la propriété de phase avec une résolution spatiale.

11. Dispositif (1) selon la revendication 9 ou 10, dans lequel l'unité d'éclairage (3) est conçue pour émettre la lumière à partir des emplacements d'émission (31-42) de la surface de sortie de lumière (30), respectivement avec une courbe d'intensité (50-53) différente dans le temps, afin de coder les différents emplacements d'émission (31-42) comme la propriété de phase.

12. Dispositif (1) selon l'une des revendications 9 à 11, dans lequel la caméra (4) est conçue comme une caméra à polarisation et/ou une caméra à temps de vol.
